# EUROPÄISCHE PATENTSCHRIFT

(11) **EP 1 841 646 B1**
(45) Veröffentlichungstag und Bekanntmachung des Hinweises auf die Patenterteilung: **14.05.2008**
(21) Anmeldenummer: 06701372.2
(22) Anmeldetag: 24.01.2006
(51) Int. Cl.: B64D 9/00, B65D 19/00

(54) **WINDSCHOTT ZUM EINSATZ IN FLUGZEUGEN**
WINDBLOCKER FOR USE IN AIRCRAFT
PARE-VENT DESTINE A ETRE EMPLOYE DANS DES AERONEFS

(30) Priorität: 25.01.2005 DE 102005003518
(43) Veröffentlichungstag der Anmeldung: 10.10.2007
(73) Patentinhaber: AUTOFLUG GMBH, D-25462 Rellingen (DE)
(72) Erfinder: HERBST, André, 25469 Halstenbeck (DE); FEHRS, Udo, 25436 Uetersen (DE)
(74) Vertreter: Müller, Karl-Ernst
(86) Internationale Anmeldenummer: PCT/EP2006/000570
(87) Internationale Veröffentlichungsnummer: WO 2006/079493

(56) Entgegenhaltungen:
- DE-A1- 2 913 050
- US-A- 2 669 402
- US-A- 3 486 723
- US-B1- 6 435 786

## Beschreibung

Die Erfindung betrifft ein im Innenraum eines Flugzeuges verankerbares Windschott.

Ein Lastennetz (auch als Windschott zu benutzen) ist aus US-A-3 486 723 bekannt, die alle Merkmale des Oberbegriffs des unabhängigen Anspruchs 1 offenbart.

Soweit ein Flugzeug zum Absetzen sowohl von Lasten als auch von Personen per Fallschirm genutzt wird, entstehen bei gleichzeitiger Öffnung einer in der Regel im Heckbereich angeordneten Lastenabsetzklappe sowie von im Längsbereich des Flugzeugrumpfes befindlichen Türen zum Absetzen von Personen erhebliche Luftströmungen im Innenraum des Flugzeuges, die beide Absetzvorgänge gleichermaßen stören und ein entsprechendes Risiko für einen schnellen und reibungslosen Absetzvorgang darstellen können.

Der Erfindung liegt daher die Aufgabe zugrunde, eine die sich im Innenraum des Flugzeuges beim Absetzvorgang einstellende Luftströmung unterbrechende Vorrichtung zur Verfügung zu stellen, die einfach und schnell im Innenraum des Flugzeuges zu montieren bzw. zu demontieren sowie Platz sparend aufzubewahren ist.

Die Lösung dieser Aufgabe ergibt sich einschließlich vorteilhafter Ausgestaltungen und Weiterbildungen der Erfindung aus dem Inhalt des unabhängigen Anspruchs 1 und der abhängigen Patentansprüche 2-28, welche dieser Beschreibung nachgestellt sind.

Die Erfindung sieht in ihrem Grundgedanken ein aus einem Gewebe, vorzugsweise aus einem textilen Gewebe bestehendes Windschott vor, bei welchem von einer zentral im Querschnitt des Innenraumes anzuordnenden Spannvorrichtung sternförmig Spanngurte zu am lasttragenden Skelett des Flugzeuges vorgesehenen Befestigungspunkten verlaufen und bei montiertem Windschott daran befestigt sind, und wobei an den Spanngurten gehalterte und den Zwischenraum zwischen den Spanngurten ausfüllende Gewebesegmente angeordnet sind.

Mit der Erfindung ist der Vorteil verbunden, dass mittels des im Inneren des Flugzeugs aufgespannten Windschotts eine durchgehende Luftströmung zwischen verschiedenen offenen Ausstiegsöffnungen in einem Flugzeug verhindert ist. Da das Windschott aus einem Gewebe besteht, nimmt das Windschott wenig Raum während seiner Aufbewahrung ein und ist zu seiner Montage leicht und schnell zu handhaben. Hierbei ist es lediglich erforderlich, die freien Enden der entsprechend vorgesehenen Spanngurte an den dafür eingerichteten Befestigungspunkten des Flugzeuges festzulegen, und durch Betätigung der zentralen Spannvorrichtung aufzuspannen. Sämtliche Befestigungen sowie das verwendete Gewebe selbst sind dabei in geeigneter Weise derart auszulegen, dass das Windschott den einwirkenden Strömungskräften widersteht beziehungsweise standhält.

Aufgrund der sternförmig verlaufenden Spanngurte ergibt sich hinsichtlich der Form der Gewebesegmente, dass diese nach einem Ausführungsbeispiel der Erfindung eine dreieckförmige bis trapezförmige Gestalt aufweisen.

Es ist vorgesehen, dass die Gewebesegmente an ihrer der Spannvorrichtung gegenüberliegenden Außenseite an die Innenwand des Flugzeugkörpers angeschlossen sind, wobei die Gewebesegmente vorzugsweise dichtend an die Innenwand des Flugzeugkörpers angeschlossen sind, um eine entsprechend am inneren Umfang des Flugzeugkörpers auftretende Luftströmung soweit als möglich zurückzuführen.

Nach Ausführungsbeispielen der Erfindung kann der Anschluss der Gewebesegmente an die Innenwand des Flugzeugkörpers alternativ mittels eines Klettverschlusses, mittels Druckknopfverbindung oder mittels Haken-Ösen-Verschlüssen verwirklicht sein. Es kann auch vorgesehen sein, dass die Gewebesegmente an einem umlaufenden und sich in der Gebrauchsstellung gegen die Innenwand des Flugzeugkörpers anlegenden aufblasbaren Schlauch angeschlossen sind.

Soweit insbesondere auch im Bodenbereich des Flugzeugkörpers eine gewisse Abdichtung vorzunehmen ist, ist nach einem Ausführungsbeispiel der Erfindung vorgesehen, dass die an den Bodenbereich des Flugzeugkörpers anstoßenden Gewebesegmente mittels eines aufliegenden, schweren, wasserundurchlässigen Gewebes gegen den Bodenbereich abgedichtet sind.

Bezüglich der Ausbildung der zentralen Spannvorrichtung ist nach einem Ausführungsbeispiel der Erfindung vorgesehen, dass die zentrale Spannvorrichtung als in seinem Durchmesser veränderlicher Ring ausgebildet ist, wobei der Ring beispielsweise als flexible Lassoschlinge ausgebildet sein kann, die bei Betätigung zusammenziehbar ist, oder der Ring kann als starrer Ringkörper mit wenigstens zwei gegeneinander beweglichen Ringsegmenten ausgebildet sein, wobei die Ringsegmente vorzugsweise ineinander einschiebbar ausgestaltet sein können. Soweit die verbleibende zentrale Öffnung in dem Ring der Spannvorrichtung einer Abdichtung bedarf, kann die Öffnung durch ein flexibles Ventilelement, beispielsweise in Form eines textilen Lappens ausgebildet sein, der im Falle eines zu großen Überdrucks durch die Öffnung hindurchschlägt und insoweit diese Öffnung zum Druckausgleich freigibt.

Damit gewährleistet sein kann, dass beispielsweise eine auf der der Lastenabsetzklappe abgewandten Seite des aufgespannten Windschotts befindliche Bedienerperson den Absetzvorgang über die Lastenabsetzklappe beobachten kann, ist nach einem Ausführungsbeispiel der Erfindung vorgesehen, dass in wenigstens einem der Gewebesegmente ein aus durchsichtigem Material bestehendes Fenster angeordnet ist.

Soweit eine Bedienerperson sich zwischen den beiden durch das Windschott getrennten Abteilen des Flugzeuginnenraums bewegen können muss, ist vorgesehen, dass wenigstens ein Gewebesegment mittels eines Reißverschlusses öffen- und schließbar ist, wobei sich nach einem Ausführungsbeispiel das den Reißverschluss enthaltende Gewebesegment zwischen der zentralen Spannvorrichtung und dem Bodenbereich des Flugzeugkörpers erstreckt.

Nach einem Ausführungsbeispiel der Erfindung ist vorgesehen, dass die Spanngurte als V-förmige Gurte ausgebildet sind, deren äußere freie Enden an den Befestigungspunkten des Flugzeugkörpers halterbar sind, wobei die Spanngurte in einer Schlinge durch die zentrale Spannvorrichtung verlaufen; hiermit ist gewährleistet, dass sich die Spannbewegung der Spanngurte problemlos vollzieht.

Nach einem Ausführungsbeispiel der Erfindung ist vorgesehen, dass die Spanngurte als längenveränderbare Gurte ausgebildet sind, um Anpassungen an unterschiedliche Flugzeugabmessungen zu ermöglichen.

Soweit längs des Flugzeugkörpers Funktionsteile wie Kabel und/oder Seile von Halterungs- oder Spannvorrichtungen für die transportierten Lasten verlaufen, ist nach einem Ausführungsbeispiel der Erfindung vorgesehen, dass in den Gewebesegmenten Öffnungen zur Durchführung von derartigen Funktionsteilen ausgebildet sind, wobei nach einem Ausführungsbeispiel der Erfindung vorgesehen ist, dass die Durchführungsöffnungen aus dem äußeren Randbereich der Gewebesegmente ausgeschnitten sind. Entsprechend der Abdichtung der zentralen Öffnung der Spannvorrichtung kann auch hinsichtlich der Durchführungsöffnungen vorgesehen sein, dass diese durch flexible Ventilelemente abgedichtet sind.

Um eine platzsparende Halterung eines im Innenraum eines Flugzeuges vormontierten Windschotts zu gewährleisten, kann nach einem Ausführungsbeispiel der Erfindung vorgesehen sein, dass am zum Dachbereich des Flugzeuges führenden Spanngurten zusätzlich Aufhängeösen zur Halterung des zu den Aufhängeösen aufgerollten Windschotts vorgesehen sind; bei diesem Ausführungsbeispiel ist es möglich, die Mehrzahl der an den Bodenbereich sowie an die Seitenbereiche des Flugzeugrumpfs angeschlossenen Spanngurte zu lösen und das Windschott nach oben zum Dachbereich hin zusammenzurollen und die so gebildete Rolle mittels der vorgesehenen Aufhängeösen festzulegen.

Im Hinblick auf die Abschottungsfunktion ist vorgesehen, dass das für die Gewebesegmente verwendete Gewebe ein textiles, luftundurchlässiges Gewebe ist.

Im Hinblick auf die Abschottungsfunktion kann es auch ausreichen, wenn das verwendete Gewebe ein Gewebe mit geringer bis mäßiger Permeabilität ist; auch der Einsatz von engmaschigen Netzgeweben ist nicht ausgeschlossen.

Die Erfindung sieht jedoch auch vor, dem Windschott weitere Funktionen zuzuweisen, wozu vorgesehen sein kann, dass das für die Gewebesegmente verwendete Gewebe aus mehreren Gewebelagen mit unterschiedlichen Funktionen aufgebaut ist. So kann eine Gewebelage zur Isolierung gegen Kälte beziehungsweise Wärme und/oder zur elektromagnetischen Abschirmung und/oder zum Schutz gegen Feuer und/oder Rauch ausgelegt sein.

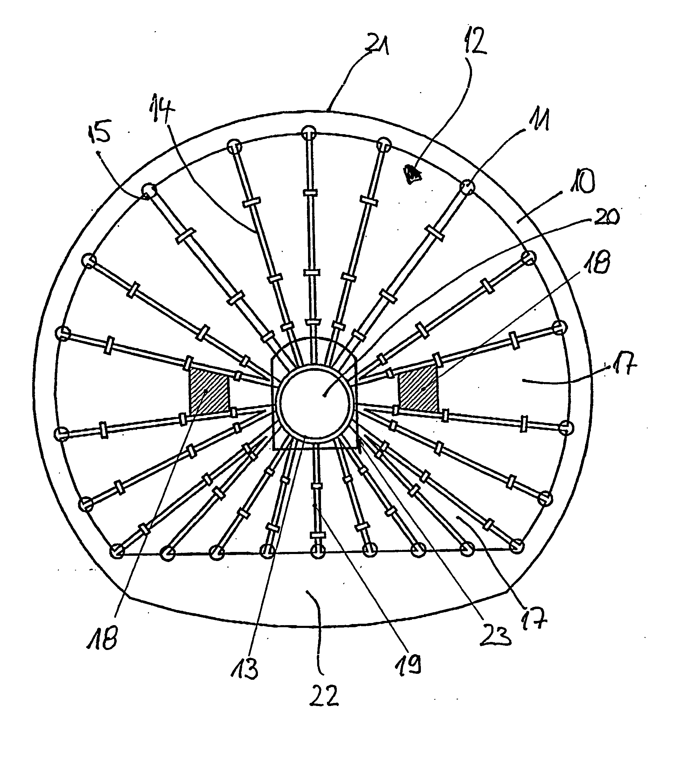

In der Zeichnung ist ein Ausführungsbeispiel der Erfindung wiedergegeben, welches nachstehend beschrieben ist. Die einzige Figur zeigt einen Flugzeugrumpf mit darin aufgespanntem Windschott in einer schematischen Querschnittansicht.

Soweit in der Zeichnung ein Flugzeugrumpf 10 dargestellt ist, sind an dessen Umfang, und zwar im Dachbereich 21 wie auch im Bodenbereich 22 sowie in den dazwischen liegenden Seitenbereichen verteilt Befestigungspunkte 11 an dem lasttragenden Skelett des Flugzeugrumpfes 10 angeordnet, derart, dass in die Befestigungspunkte 11 eingeleitete Kräfte von dem tragenden Skelett des Flugzeugrumpfes 10 aufgenommen werden. Der Querschnitt des durch den in der Zeichnung dargestellten Flugzeugrumpf definierten Innenraums des Flugzeugs ist von einem aufgespannten Windschott 12 abgedeckt. Das Windschott 12 besteht aus von einem zentral im Querschnitt des Innenraums anzuordnenden Ring 13 sternförmig ausgehenden, längenveränderbaren und zu den Befestigungspunkten 11 verlaufenden Spanngurten 14, die mit ihrem freien Ende 15 jeweils an den Befestigungspunkten 11 angeschlossen sind.

Der zwischen den Spanngurten 14 jeweils befindliche, dreieckförmige Zwischenraum ist durch Gewebesegmente 17 aus einem vorzugsweise textilen Gewebe ausgefüllt, wobei die Gewebesegmente 17 jeweils mit den Spanngurten 14 in geeigneter Weise verbunden sind. Bei dem dargestellten Ausführungsbeispiel sind in zwei der von dem zentralen Ring 13 zu den Seitenbereichen des Flugzeugrumpfs 10 führenden Gewebesegmente 17 durch Verwendung eines durchsichtigen Materials hergestellte Fenster 18 angeordnet, so dass auf der einen Seite des Windschotts 12 befindliche Bedienerpersonen Bewegungsvorgänge auf der anderen Seite des Windschotts 12 beobachten können. Um eine einfache Durchgänglichkeit des Windschotts 12 herzustellen, führt ein Reißverschluss 19 von dem zentralen Ring 13 zum Bodenbereich 22 des Flugzeugrumpfes 10. Wenn dieser Reißverschluss 19 geöffnet ist, kann eine Bedienerperson durch das Windschott 12 hindurchschlüpfen.

Soweit der zentrale Ring 13 eine Mittenöffnung 20 aufweist, ist diese durch ein lappenförmiges textiles Element 23 abgedeckt, welches zum Zwecke des Druckausgleichs bei entsprechender Beanspruchung durch die Öffnung 20 hindurchschlagen kann.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Im Innenraum eines Flugzeuges verankerbares, aus einem Gewebe bestehendes Windschott (12), bei welchem von einer zentral im Querschnitt des Innenraumes anzuordnenden Spannvorrichtung (13) sternförmig Spanngurte (14) zu am lasttragenden Skelett des Flugzeuges vorgesehenen Befestigungspunkten (11) verlaufen und bei montiertem Windschott (12) daran befestigt sind, **dadurch gekennzeichnet, daß** an den Spanngurten (14) gehalterte und den Zwischenraum zwischen den Spanngurten (14) ausfüllende Gewebesegmente (17) angeordnet sind.

2. Windschott nach Anspruch 1, bei welchem die Gewebesegmente (17) eine dreieckförmige bis trapezförmige Gestalt aufweisen.

3. Windschott nach Anspruch 1 oder 2, bei welchem die Gewebesegmente (17) an ihrer der Spannvorrichtung (13) gegenüberliegenden Außenseite an die Innenwand des Flugzeugkörpers (10) angeschlossen sind.

4. Windschott nach Anspruch 3, bei welchem die Gewebesegmente (17) dichtend an die Innenwand des Flugzeugkörpers (10) angeschlossen sind.

5. Windschott nach Anspruch 3 oder 4, bei welchem der Anschluss der Gewebesegmente (17) an die Innenwand des Flugzeugkörpers (10) mittels eines Klettverschlusses gegeben ist.

6. Windschott nach Anspruch 3 oder 4, bei welchem der Anschluss der Gewebesegmente (17) an die Innenwand des Flugzeugkörpers (10) mittels Druckknopfverbindungen gegeben ist.

7. Windschott nach Anspruch 3 oder 4, bei welchem der Anschluss der Gewebesegmente (17) an die Innenwand des Flugzeugkörpers (10) mittels Haken-Ösen-Verschlüsse gegeben ist.

8. Windschott nach Anspruch 3 oder 4, bei welchem die Gewebesegmente (17) an einem umlaufenden und sich in der Gebrauchsstellung gegen die Innenwand des Flugzeugkörpers (10) anlegenden aufblasbaren Schlauch angeschlossen sind.

9. Windschott nach einem der Ansprüche 4 bis 8, bei welchem die an den Bodenbereich (22) des Flugzeugkörpers (10) anstoßenden Gewebesegmente (17) mittels eines aufliegenden, schweren, wasserundurchlässigen Gewebes gegen den Bodenbereich abgedichtet sind.

10. Windschott nach einem der Ansprüche 1 bis 9, bei welchem die zentrale Spannvorrichtung als in seinem Durchmesser veränderlicher Ring (13) ausgebildet ist.

11. Windschott nach Anspruch 10, bei welchem der Ring (13) als flexible Lassoschlinge ausgebildet ist.

12. Windschott nach Anspruch 10, bei welchem der Ring (13) als starrer Ringkörper mit wenigstens zwei gegeneinander beweglichen Ringsegmenten ausgebildet ist.

13. Windschott nach einem der Ansprüche 1 bis 12, bei welchem die verbleibende zentrale Öffnung (20) in dem Ring (13) der Spannvorrichtung durch ein flexibles Ventilelement (23) abgedichtet ist.

14. Windschott nach einem der Ansprüche 1 bis 13, bei welchem in wenigstens einem der Gewebesegmente (17) ein aus durchsichtigem Material bestehendes Fenster (18) angeordnet ist.

15. Windschott nach einem der Ansprüche 1 bis 14, bei welchem wenigstens ein Gewebesegment (17) mittels eines Reißverschlusses (19) öffen- und schließbar ist.

16. Windschott nach Anspruch 15, bei welchem sich das den Reißverschluss (19) enthaltende Gewebesegment (17) zwischen der zentralen Spannvorrichtung (13) und dem Bodenbereich (22) des Flugzeugkörpers erstreckt.

17. Windschott nach einem der Ansprüche 1 bis 16, bei welchem die Spanngurte (14) als V-förmige Gurte ausgebildet sind, deren äußere freie Enden an den Befestigungspunkten (11) des Flugzeugkörpers (10) halterbar sind, wobei die Spanngurte (14) in einer Schlinge durch die zentrale Spannvorrichtung (13) verlaufen.

18. Windschott nach einem der Ansprüche 1 bis 17, bei welchem die Spanngurte (14) als längenveränderbare Gurte ausgeführt sind.

19. Windschott nach einem der Ansprüche 1 bis 18, bei welchem in den Gewebesegmenten (17) Öffnungen zur Durchführung von längs des Flugzeugkörpers (10) verlaufenden Funktionsteilen ausgebildet sind.

20. Windschott nach Anspruch 19, bei welchem die Dürchführungs-öffnungen aus dem äußeren Randbereich der Gewebesegmente (17) ausgeschnitten sind.

21. Windschott nach Anspruch 19 oder 20, bei welchem die Durchführungsöffnungen durch flexible Ventilelemente abgedichtet sind.

22. Windschott nach einem der Ansprüche 1 bis 21, bei welchem am zum Dachbereich (21) des Flugzeuges (10) führenden Spanngurten (14) zusätzlich Aufhängeösen zur Halterung des zu den Aufhängeösen aufgerollten Windschotts (12) vorgesehen sind.

23. Windschott nach einem der Ansprüche 1 bis 22, bei welchem das für die Gewebesegmente (17) verwendete Gewebe ein textiles, luftundurchlässiges Gewebe ist.

24. Windschott nach einem der Ansprüche 1 bis 22, bei welchem das für die Gewebesegmente (17) verwendete Gewebe ein Gewebe mit geringer bis mäßiger Permeabilität ist

25. Windschott nach einem der Ansprüche 1 bis 24, bei welchem das für die Gewebesegmente (17) verwendete Gewebe aus mehreren Gewebelagen mit unterschiedlichen Funktionen aufgebaut ist.

26. Windschott nach Anspruch 25, bei welchem eine Gewebelage zur Isolierung gegen Kälte bzw. Wärme ausgelegt ist.

27. Windschott nach Anspruch 25, bei welchem eine Gewebelage zur elektromagnetischen Abschirmung ausgelegt ist.

28. Windschott nach Anspruch 25, bei welchem eine Gewebelage zum Schutz gegen Feuer und/oder Rauch ausgelegt ist.

## Claims

1. Windblocker (12) that can be anchored in the interior of an aircraft and is comprised of a fabric, according to which securing straps (14) extend radially from a tensioning device (13) that is to be centrally disposed in the cross-sectional area of the interior to fastening points (11) provided on the load-bearing skeleton of the aircraft and are secured thereto when the windblocker (12) is installed, **characterised in that** fabric segments (17) are supported on the securing straps (14) and fill the space between the securing straps (14).

2. Windblocker according to claim 1, according to which the fabric segments (17) have a triangular to trapezoidal shape.

3. Windblocker according to claim 1or 2, according to which the fabric segments (17) are connected to the inner wall of the aircraft body (10) on their outer side opposite the tensioning device (13).

4. Windblocker according to claim 3, according to which the fabric segments (17) are sealingly connected to the inner wall of the aircraft body (10).

5. Windblocker according to claim 3 or 4, according to which the connection of the fabric segments (17) to the inner wall of the aircraft body (10) is provided by means of a Velcro-type fastener

6. Windblocker according to claim 3or 4. according to which the connection of the fabric segments (17) to the inner wall of the aircraft body (10) is provided by means of snap-button fasteners.

7. Windblocker according to claim 3 or 4, according to which the connection of the fabric segments (17) to the inner wall of *the* aircraft body (10) is provided by means of hook and eye fasteners.

8. Windblocker according to claim 3 or 4 according to which the fabric segments (17) are connected to a circumferential, inflatable hose or tube that in the position of use rests against the inner wall of the aircraft body (10).

9. Windblocker according to one of the claims 4 to 8, according to which the fabric segments (17) that abut against the region of the base (22) of the aircraft body (10) are sealed relative to the region of the base by means of a contacting, heavy, water-impervious fabric.

10. Windblocker according to one of the claims 1 to 9, according to which the central tensioning device is embodied as a ring (13), the diameter of which can be varied,

11. Windblocker according to claim 10, according to which the ring (13) is embodied as a flexible lasso loop.

12. Windblocker according to claim 10, according to which the ring (13) is embodied as a rigid annular body having at least two ring segments that are movable relative to one another

13. Windblocker according to one of the claims 1 to 12, according to which the remaining central opening (20) in the ring (13) of the tensioning device is sealed by a flexible valve element (23).

14. Windblocker according to one of the claims 1 to 13, according to which a window (18) made of transparent material is disposed in at least one of the fabric segments (17).

15. Windblocker according to one of the claims 1 to 14, according to which at least one fabric segment (17) can be opened and closed by means of a zipper or slide fastener (19),

16. Windblocker according to claim 15, according to which the fabric segment (17) that contains the zipper fastener (19) extends between the central tensioning device (13) and the region of the base (22) of the aircraft body,

17. Windblocker according to one of the claims 1 to 16, according to which the securing straps (14) are embodied as V-shaped straps, the outer free ends of which can be supported on the mounting points (11) of the aircraft (10), whereby the securing straps (14) extend in a loop through the central tensioning device (13).

18. Windblocker according to one of the claims 1 to 17, according to which the securing straps (14) are embodied as straps that can be varied in length.

19. Windblocker according to one of the claims 1 to 18, according to which openings are provided in *the* fabric segments (17) for running functional components through which extend along the aircraft body (10).

20. Windblocker according to claim 19, according to which the run through openings are cut out of the outer edge region of the fabric segments (17).

21. Windblocker according to claim 19 or 20, according to which the run through openings are sealed by flexible valve elements.

22. Windblocker according to one of the claims 1 to 21, according to which additionally provided on securing straps (14) that lead to the region of the roof (21) of the aircraft (10) are suspension eyes or loops for supporting the windblocker (12) that is rolled up to the suspension eyes or loops.

23. Windblocker according to one of the claims 1 to 22, according to which the fabric used for the fabric segments (17) is a textile, air-impervious fabric.

24. Windblocker according to one of the claims 1 to 22, according to which the fabric used for the fabric segments (17) is a fabric having low to moderate permeability.

25. Windblocker according to one of the claims 1 to 24, according to which the fabric used for the fabric segments (17) is composed of several fabric plies having different functions.

26. Windblocker according to claim 25, according to which one fabric ply designed for insulation against cold or heat.

27. Windblocker according to claim 26, according to which one fabric ply is designed for electromagnetic screening.

28. Windblocker according to claim 25, according to which one fabric ply is designed to protect against fire and/or smoke.

## Revendications

1. Pare-vent (12) en tissu destiné à être fixé dans l'espace intérieur d'un aéronef, dans lequel des sangles de tension (14) s'étendent en étoile depuis un dispositif de tension (13), destiné à être disposé au centre de la section de l'espace intérieur, vers des points de fixation (11) prévus sur l'ossature, supportant la charge de l'aéronef, et sont fixées à ceux-ci lorsque le pare-vent (12) est monté, **caractérisé en ce que** des segments de tissu (17) sont agencés en étant fixés aux sangles de tension (14) et en remplissant l'intervalle entre les sangles de tension (14).

2. Pare-vent selon la revendication 1, dans lequel les segments de tissu (17) ont une forme triangulaire jusqu'à trapézoïdale.

3. Pare-vent selon la revendication 1 ou 2, dans lequel les segments de tissu (17), sur leur côté extérieur, opposé au dispositif de tension (13), sont attachés à la paroi intérieure du fuselage (10) de l'aéronef.

4. Pare-vent selon la revendication 3, dans lequel les segments de tissu (17) sont attachés de manière étanche à la paroi intérieure du fuselage (10) de l'aéronef.

5. Pare-vent selon la revendication 3 ou 4, dans lequel l'assemblage des segments de tissu (17) contre la paroi intérieure du fuselage (10) de l'aéronef est effectué au moyen d'une bande velcro.

6. Pare-vent selon la revendication 3 ou 4, dans lequel l'assemblage des segments de tissu (17) contre la paroi intérieure- du fuselage (10) de l'aéronef est effectué au moyen d'assemblages à boutons de pression.

7. Pare-vent selon la revendication 3 ou 4, dans lequel l'assemblage des segments de tissu (17) contre la paroi intérieure du fuselage (10) de l'aéronef est effectué au moyen d'assemblages à anneaux et crochets.

8. Pare-vent selon la revendication 3 ou 4, dans lequel les segments de tissu (17) sont attachés à un tuyau flexible périphérique, qui se dilate dans la position d'utilisation en prenant appui contre la paroi intérieure du fuselage (10) de l'aéronef.

9. Pare-vent selon l'une quelconque des revendications 4 à 8, dans lequel les segments de tissu (17), venant buter contre la zone de plancher (22) du fuselage (10) de l'aéronef, sont rendus étanches par rapport à la zone de plancher au moyen d'un tissu imperméable lourd, en appui sur ladite zone.

10. Pare-vent selon l'une quelconque des revendications 1 à 9, dans lequel le dispositif de tension central est réalisé sous la forme d'un anneau (13) à diamètre variable.

11. Pare-vent selon la revendication 10, dans lequel l'anneau (13) est réalisé sous la forme d'une boucle de lasso flexible.

12. Pare-vent selon la revendication 10, dans lequel l'anneau (13) est réalisé sous la forme d'un corps annulaire rigide comportant au moins deux segments mobiles l'un par rapport à l'autre.

13. Pare-vent selon l'une quelconque des revendications 1 à 12, dans lequel l'ouverture (20) centrale subsistant dans l'anneau (13) du dispositif de tension est rendue étanche par un élément à clapet (23) flexible.

14. Pare-vent selon l'une quelconque des revendications 1 à 13, dans lequel une fenêtre (18) en matériau transparent est réalisée dans au moins un des segments de tissu (17).

15. Pare-vent selon l'une quelconque des revendications 1 à 14, dans lequel au moins un segment tissu (17) peut être ouvert et fermé par une fermeture éclair (19).

16. Pare-vent selon la revendication 15, dans lequel le segment tissu (17) muni de la fermeture éclair s'étend entre le dispositif de tension (13) central et la zone de plancher (22) du fuselage de l'aéronef.

17. Pare-vent selon l'une quelconque des revendications 1 à 16, dans lequel les sangles de tension (14) sont réalisées sous forme de sangles en forme de V, dont les extrémités libres extérieures peuvent être fixées aux points de fixation (11) du fuselage (10) de l'aéronef, les sangles de tension (14) s'étendant en formant une boucle à travers le dispositif de tension (13) central.

18. Pare-vent selon l'une quelconque des revendications 1 à 17, dans lequel les sangles de tension (14) sont réalisées sous forme de sangles à longueur variable.

19. Pare-vent selon l'une quelconque des revendications 1 à 18, dans lequel dans les segments de tissu (17) sont réalisées des ouvertures pour le passage d'éléments fonctionnels s'étendant le long du fuselage (10) de l'aéronef.

20. Pare-vent selon la revendication 19, dans lequel les ouvertures de passage sont découpées dans la zone de bordure extérieure des segments de tissu (17).

21. Pare-vent selon la revendication 19 ou 20, dans lequel les ouvertures de passage sont rendues étanches par des éléments à clapet flexibles.

22. Pare-vent selon l'une quelconque des revendications 1 à 21, dans lequel des anneaux de suspension supplémentaires, destinés à la fixation du pare-vent (12) déroulé vers les anneaux de suspension, sont prévus sur les sangles de tension (14) guidées vers la zone de plafond (21) de l'aéronef (10).

23. Pare-vent selon l'une quelconque des revendications 1 à 22, dans lequel le tissu utilisé pour les segments de tissu (17) est un tissu textile imperméable à l'air.

24. Pare-vent selon l'une quelconque des revendications 1 à 22, dans lequel le tissu utilisé pour les segments de tissu (17) est un tissu avec une perméabilité faible jusqu'à moyenne.

25. Pare-vent selon l'une quelconque des revendications 1 à 24, dans lequel le tissu utilisé pour les segments de tissu (17) est un tissu constitué de plusieurs couches de tissu à fonctions différentes.

26. Pare-vent selon la revendication 25, dans lequel une couche de tissu est conçue pour l'isolation contre le froid ou la chaleur.

27. Pare-vent selon la revendication 25, dans lequel une couche de tissu est conçue pour une protection électromagnétique.

28. Pare-vent selon la revendication 25, dans lequel une couche de tissu est conçue pour la protection contre le feu et/ou la fumée.
